# EUROPEAN PATENT SPECIFICATION

(11) **EP 3 293 036 B1**
(45) Date of publication and mention of the grant of the patent: **25.08.2021**
(21) Application number: 16187684.2
(22) Date of filing: 07.09.2016
(51) Int. Cl.: B60L 15/38, B60L 53/22, B60L 58/20

(54) **PARENT BATTERY TO SLAVE BATTERY ENERGY TRANSFER FOR COMPOSITE SYSTEMS**
ENERGIETRANSFER VON ELTERN-BATTERIE ZU SLAVE-BATTERIE FÜR VERBUNDSYSTEME
BATTERIE PARENT POUR TRANSFERT D'ENERGIE VERS BATTERIE ESCLAVE POUR SYSTEMES COMPOSITES

(43) Date of publication of application: 14.03.2018
(73) Proprietor: iN2POWER NV, 9940 Evergem (BE)
(72) Inventor: Besard, Peter, 8300 Knokke (BE); De Clercq, John, 9340 Oordegem (BE); Verselder, Jef, 9940 Belzele (BE)
(74) Representative: De Clercq & Partners

(56) References cited:
- EP-A2- 1 568 114
- CN-A- 104 362 711
- US-A1- 2011 025 124
- None

## Description

### Technical field

The invention pertains to the technical field of battery (or similar energy-storing elements such as supercapacitators) charging and charging control in automated guided vehicles (named hereunder AGVs), such as fork trucks, pallet trucks, assembly line vehicles, towing vehicles and others. New applications of AGV show a composition of multiple AGVs or a main AGV with AGV subunits that can be decoupled from the main AGV and that can perform operations using power while separated from the main AGV. These can comprise several subunits (for instance gear) that can be modularly added and removed from the main AGV, which generally performs the driving from location to location, while the functional subunits or functional AGV slave (modules) are designed to perform specific actions such as lifting, rotating and translations of objects or separately driving as a functional AGV slave module, etc. Specifically, the invention is aimed at an on-AGV device, and related method, for power transfer between batteries to maintain a sufficient charge level in the batteries of both the main AGV and of the functional AGV slave modules, even though these typically can differ in voltage input and output.

### Background

Currently, automated industrial vehicles are widely used in factories, warehouses and the likes. These vehicles require frequent charging which currently is provided in 3 general ways. Manual battery swap, automatic battery swap, and opportunity charging. Supercapacitors are also getting more and more energy storage capabilities, and are to be considered as falling under the scope of the term "battery". These are to be considered for the rest of this document as a possible embodiment of a battery, unless stated otherwise. The first charging technique requires the intervention of a human operator. Although this process has been streamlined, the swapping of batteries takes time. The second is an improvement on the first technique, but requires elaborate and expensive machinery to perform the swapping, furthermore, errors in the execution could have catastrophic results for the AGV and/or the batteries. The last option is being developed further in the last few years, as it requires little to no human intervention, limited machinery costs and low risk levels. The AGV simply moves towards a charging station when low on batteries and charges. In the large spaces where the AGVs typically are used, a charging area takes up little space, while the control of the AGV is sufficient to allow very accurate positioning with respect to the charging station for optimal charging.

However, a specific version of the AGVs currently used, comprises one or more subunits, here referred to as functional AGV slave module or AGV slave. A main AGV can be designated which is responsible for the movement ('driving') in the working area, while several subsystems can be (modularly) added thereto for more specific operations including optional driving. As the range of functions increases, so does the need for energy of this composite AGV, which requires the provision of several batteries, at least one for certain functional AGV slave modules and at least one for the main AGV. These are typically designed to optimally suit the energy needs of the main AGV and the subunits of the AGV. Typically the main AGV will consume more power than most of the subunits and will be provided with a battery with a larger capacity or several smaller batteries. However, this is only a prediction, the actual operations to be executed by the composite AGV and its parts varies greatly with time, and so does the energy consumption of the parts. Therefore, it is to be expected that often the battery of one unit will be drained (much) earlier than expected, even though the other batteries still have ample charge left in them. On such occasions, the AGV will nonetheless be forced to return to the charging area (be it for manual swap, automatic swap or opportunity charging) in order to be recharged. This is however highly inefficient as the battery that burns through its charge the fastest, determines the pace with which recharging needs to be executed, thus following the rhythm of the weakest element. By enabling inter-battery charging, the total operating time of the composite AGV is extended, as in prior art devices, the AGV needs to return for recharging when one of the slave unit's battery runs out (or that of the main AGV).

Current options to charge a battery from another battery with almost the same voltage are limited to makeshift combinations of existing products, for example combining two converters, a first to convert a first battery voltage to a higher voltage, a second converter to convert the higher voltage to the needed output battery voltage. However, these solutions are not economically viable as they are more expensive and above all, generally score very poorly in efficient energy use/transfer.

CN 104 362 711 discloses a charge and discharge detection system for battery packs of an AGV. US2011025124 discloses a battery module having a bi-directional battery voltage converter, a first battery, and a second battery and a controller selectively energizing the respective batteries. EP1568114 discloses a system and method of balancing state of charge among plural series connected storage unit.

There remains a need in the art for a device or system that allows strategic on-line redistribution of charge between batteries of the AGV (1 to 1, multiple to 1 and 1 to multiple are possible), even when these are of different input/output voltages. When a battery runs low, it is desirable that an energy transfer takes place directly and efficiently (minimal energy losses from transfer) from a (or several) fuller battery to the low-running battery.

The present invention aims to resolve at least some of the problems mentioned above.

### Summary of the invention

The present invention is directed to the composite automated guided vehicle (AGV) of claim 1 and the method of claim 14. Advantageous embodiments are set out in the dependent claims.

The present invention concerns a composite automated guided vehicle AGV having a power transfer system, said composite AGV comprising a main AGV and one or more detachable functional AGV slave modules modularly mounted on the composite AGV, between a battery of the main AGV to a battery of one of the functional AGV slave modules, whereby the battery of the functional AGV slave module comprises a normal output voltage within a range of 25% to 400%, preferably within a range of 50% to 200%, of a normal output voltage of the battery of the main AGV, comprising:
a. at least one power transfer circuit according to a buck-boost topology which comprises a buck circuit and a boost circuit, and optionally a DC link between the buck circuit and the boost circuit;
b. one or more first separable connection means which are electrically connected to the buck circuit, adapted to electrically, separably connect the battery of the main AGV to the buck circuit;
c. one or more second separable connection means which are electrically connected to the boost circuit, adapted to electrically, separably connect the boost circuit to the battery of the functional AGV slave module;
wherein the power transfer circuit is configured to transfer electrical power between the battery of the main AGV and the battery of the functional AGV slave module when the battery of the main AGV or the battery of the functional AGV slave module has a state of charge below a predetermined and/or possibly variable threshold state of charge.

Preferably, the power transfer circuit is adapted to operate under an extra-low voltage (ELV) for the normal output voltage of the main AGV (preferably between 10 V and 96 V, more preferably between 16 V and 65 V, most preferably between 20 V and 55 V, specifically either about 24 V or about 48 V).

More preferably, the system for power transfer comprises a control unit, preferably a microcontroller, which control unit is configured to control the power transfer circuit and to determine the battery of which functional AGV slave module is to be engaged as recipient or donor power in the power transfer with the battery of the main AGV. Preferably, the control unit controls this based on the state of charge of the battery of the main AGV and/or the state of charge of the battery of the functional AGV slave module.

Preferably, the power transfer circuit comprises (or is) a diode-less buck-boost converter, preferably wherein said buck-boost converter uses one or more MOSFETs and/or MODFETs, more preferably Gallium nitride (GaN) MODFETs, for switching. However, alternative circuits can be used comprising diodes, or the amount of diodes used can simply be reduced as much as possible.

Even more preferably, the power transfer circuit comprises a communication bus network, preferably a CAN bus network, which is adapted to be connected to the main AGV and the one or more functional AGV slave modules, whereby said communication bus network, preferably a CAN bus network is adapted to determine the state of charge of the battery of the main AGV and/or the state of charge of the battery of the one or more functional AGV slave modules, and whereby said communication bus network, preferably a CAN bus network, is configured to transmit said state of charge of the main AGV and/or said state of charge of the functional AGV slave module to the control unit. Alternatively, the power transfer circuit is adapted to determine said state(s) of charge and provide/transmit these to a control unit.

In a possible embodiment, the power transfer circuit comprises:
a. a first switch with a first terminal electrically connected to the first connection means;
b. a fourth switch with a first terminal electrically connected to the second connection means;
c. a first inductor with a first terminal electrically connected to a second terminal of the first switch;
d. a second inductor with a first terminal electrically connected to a second terminal of the fourth switch, and with a second terminal electrically connected to a second terminal of the first inductor;
e. a second switch with a first terminal electrically connected to the second terminal of the first switch, and with a second terminal electrically connected to a ground;
f. a third switch with a first terminal electrically connected to the second terminal of the fourth switch, and with a second terminal electrically connected to a ground;
g. a capacitor with a first terminal electrically connected to the second terminal of the first inductor and to the second terminal of the fourth inductor, and with a second terminal electrically connected to a ground; and
h. optionally a control unit configured to electronically control the first switch, the third switch, the second switch and the fourth switch.

In an alternative embodiment, the power transfer circuit comprises:
a. a first switch with a first terminal electrically connected to the first connection means;
a. a fourth switch with a first terminal electrically connected to the second connection means;
b. an inductor with a first terminal electrically connected to a second terminal of the first switch and a second terminal electrically connected to a second terminal of the fourth switch;
c. a second switch with a first terminal electrically connected to the second terminal of the first switch, and with a second terminal electrically connected to a ground;
d. a third switch with a first terminal electrically connected to the second terminal of the fourth switch, and with a second terminal electrically connected to a ground; and
e. optionally a control unit configured to electronically control the first switch, the third switch, the second switch and the fourth switch.

The control units of the above embodiments can be according to the control units specified earlier and further in this document.

Preferably, a filter is present between the first switch (or the buck circuit) and the first connection means. Said filter is adapted to equalize input and/or output voltages and/or input current and/or output currents of the power transfer circuit. More preferably, said filter is adapted to reduce input ripple current and/or to reduce output ripple current. Preferably, a filter is present between the fourth switch (or the boost circuit) and the second connection means. Said filter is adapted to equalize input voltage and/or input current for the power transfer circuit and/or adapted to equalize output voltage and/or output current of the power transfer circuit. More preferably, said filter is adapted to reduce output ripple current and/or to reduce input ripple current. Most preferably, both filters are present at the aforementioned positions.

Preferably, the control unit controls the first switch, the fourth switch, the second switch and the third switch based on the state of charge of the battery of the main AGV and/or on the state of charge of the battery of the functional AGV slave module, and based on the normal output voltage of the battery of the main AGV and the normal output voltage of the battery of the functional AGV slave module. Said system for power transfer is designed to optimize energy storage and use within the composite AGV.

Provided herein is a composite AGV comprising a main AGV and a plurality of detachable functional AGV slave modules modularly mounted on the composite AGV, the main AGV and the functional AGV slave modules each comprising at least one battery, whereby a system for power transfer as disclosed in this document is provided between the battery of the main AGV and the battery of each of the functional AGV slave modules.

### Description of figures

**Figure 1A** shows a structural view of a composite AGV with a single main AGV (battery) and a single functional AGV slave module (battery), connected by a power transfer system of the invention.
**Figure 1B** shows a structural view of a composite AGV with a single main AGV (battery) and a plurality of single functional AGV slave modules (battery), connected by a power transfer system of the invention.
**Figure 1C** shows a structural view of a composite AGV with a single main AGV (battery) and a plurality of single functional AGV slave modules (battery), connected by a power transfer system of the invention.
**Figure 1D** shows a structural view of a composite AGV with a single main AGV (battery) and a plurality of single functional AGV slave modules (battery), each connected to the single main AGV (battery) by a separate power transfer system of the invention.
**Figure 2A-2B****-2C-2D** show four possible embodiments of a power transfer system according to the invention.

### Detailed description of the invention

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

As used herein, the following terms have the following meanings:
"A", "an", and "the" as used herein refers to both singular and plural referents unless the context clearly dictates otherwise. By way of example, "a compartment" refers to one or more than one compartment.

"About" as used herein referring to a measurable value such as a parameter, an amount, a temporal duration, and the like, is meant to encompass variations of +/-20% or less, preferably +/-10% or less, more preferably +/-5% or less, even more preferably +/-1% or less, and still more preferably +/-0.1% or less of and from the specified value, in so far such variations are appropriate to perform in the disclosed invention. However, it is to be understood that the value to which the modifier "about" refers is itself also specifically disclosed.

"Comprise", "comprising", and "comprises" and "comprised of" as used herein are synonymous with "include", "including", "includes" or "contain", "containing", "contains" and are inclusive or open-ended terms that specifies the presence of what follows e.g. component and do not exclude or preclude the presence of additional, non-recited components, features, element, members, steps, known in the art or disclosed therein.

The term "battery" refers generally to any element or component capable of rechargeable energy storage, thus also representing alternatives to more common batteries, for instance supercapacitors. It furthermore is in not necessarily reduced to a single battery, but could also describe a battery pack which combines several separate batteries into a unit that allows to install said battery pack more easily, instead of installing the batteries separately. Furthermore, such a battery pack can be provided with extra features, for instance allowing data transfer (in one or both ways) between the battery pack and other systems, preferably the power transfer system of the invention.

The term "connection means" of the power transfer system refers to a means configured to (electrically) connect to an AGV and specifically to its battery (or battery unit). This can be achieved by actual connectors, (such as press-fit connectors and others), but it can also refer to contacts, which typically are conducting surfaces that are designed to make contact with a second contact of another device thus establishing an electric connection, in this case with a contact of the AGV. Such a type of connection means is currently commonly used in AGVs. The term "separable" means that the connections effected by the connection means can be reversed, preferably easily.

The term "composite AGV" refers to a combination of several (modular) AGVs. Typically, these comprise a main AGV (which performs the movement of the composite AGV), and a number of functional AGV slave modules, which are typically built for specific actions (rotation, picking up, clamping, driving, etc.). There is no upper limit for the number of AGVs in the composite AGV. Furthermore, some of the functional AGV slave modules will have one or more personal batteries (or supercapacitors), while others could possibly leech on the battery/batteries of the main AGV.

The term "functional AGV slave module" refers to tools, machinery, systems designed for a (limited) number of specific functions (as mentioned before), and can for instance be industrial robots, cobots, and any other (modular or not) system, tools or machinery designed for a (limited) number of specific functions, which can be attached and detached to a main or composite AGV, and thus require a power source for use when detached from the composite AGV. As such, the functional AGV slave modules can be tools (or the likes of such) requiring power from a personal battery, which can be detached from the main or composite AGV to be employed separately, be it autonomously or by a human operator. Furthermore, some of the functional AGV slave modules can be provided with a personal movement system which allows them to (autonomously or not) move (drive or other types of movement) around when separated from the main or composite AGV, and are powered by a personal battery, and can even be configured to be able to autonomously detach and reattach themselves to a main or composite AGV (not necessarily their previous main or composite AGV). For instance, such separate movement of the AGV slave module can comprise a detachment of the AGV slave module from the composite AGV to distribute certain items (material, tools, goods) at certain stations or stocking a warehouse, after which the slave module can reattach itself to the composite AGV (or another one). The term "functional AGV slave module" can also be understood as "slave function" or "slave unit", "slave device" or others.

The term "detachable" or "detachably" when used for functional AGV slave modules refers to the functional AGV slave modules being able to be mounted to a main AGV or composite AGV in a detachable and reattachable fashion.

The recitation of numerical ranges by endpoints includes all numbers and fractions subsumed within that range, as well as the recited endpoints.

In a first aspect, the invention provides a system for power transfer on a composite automated guided vehicle (AGV), comprising a main AGV and one or more detachable functional AGV slave modules modularly mounted on the composite AGV, between a battery of the main AGV to a battery of one of the functional AGV slave modules, whereby the battery of the functional AGV slave module comprises a normal output voltage within a range of 25% to 400%, preferably within a range of 50% to 200%, of a normal output voltage of the battery of the main AGV, comprising:
a. at least one power transfer circuit according to a buck-boost topology which comprises a buck circuit, a boost circuit, and optionally a DC link which electrically connects the buck circuit to the boost circuit;
b. one or more first separable connection means which are electrically connected to the buck circuit, adapted to electrically, separably connect the battery of the main AGV to the buck circuit;
c. one or more second separable connection means which are electrically connected to the boost circuit, adapted to electrically, separably connect the boost circuit to the battery of the functional AGV slave module;
wherein the power transfer circuit is configured to transfer electrical power between the battery of the main AGV and the battery of the functional AGV slave module when the charge control unit determines a state of charge of the battery of the main AGV or the battery of the functional AGV slave module below a predetermined and/or possibly variable threshold state of charge.

Note that the number of first separable connection means and second separable connection means can depend on the number of batteries for the main AGV or the number of batteries for a functional AGV slave module, or the number of functional AGV slave modules. It may be preferable that, in case of multiple batteries for one or more of the AGV units (slave or main) all batteries of this AGV unit are linked per AGV unit, and thus can be charged/discharged in a single connection. However, the batteries may also all (or some) be separately connected by a separable connector or contact (connection means) to the power transfer circuit. Furthermore it is to be noted that it is also possible that a plurality of power transfer circuits are provided, each connecting the battery of a specific slave unit to the battery of the main AGV.

Furthermore, it is to be understood that by dividing the power transfer system itself in separate parts (which may be modularly coupled, such as a buck-circuit and a boost-circuit which can be combined), the concept of the invention does not change, and both a power transfer system according to the invention in its whole, or divided into combinable parts, are to be considered as falling under the scope of the invention at hand.

Currently, not every AGV is a standalone, simple and straightforward piece of machinery as in the past such as a basic forklift, or a pallet truck, but can be combinations of several types of functionalities which are modularly mashed together on a 'main' body which generally moves the subunits around to where they need to be, thus forming a 'composite AGV'. The 'main AGV' typically performs the role of driver for the composite AGV and will of course be pivotal (and typically be provided with more batteries and/or batteries with a higher capacity). The subunits or 'functional AGV slave modules' are often specifically designed to perform one (or a few) distinct operations, such as lifting, rotating, clamping, or others, driving (often separately and even autonomously from the composite AGV) and are provided with a battery (pack) of their own. As it is impossible to predict the workload for each of the subunits (this can vary greatly in time as well), the capacity of the battery packs for each subunit or functional AGV slave module can only be based on an estimation of the typical energy consumption for the subunits or functional AGV slave module. In practice, this will lead to some battery packs running empty ahead of the estimation, while others retain more charge than expected.

As discussed previously, the advantages of the proposed system are evident. It allows redistribution of charge between separate subunits of the composite AGV, thus lengthening the work cycle of the composite AGV considerably, as it is no longer the first battery to empty that dictates the length of the work cycle (so potentially with other batteries still significantly charged) but instead closer to a completely discharged set of batteries before the composite AGV needs to be recharged. This will reduce down-time for the composite AGVs as they no longer need to be recharged when a first empty battery needs to be fully charged (while the other batteries will be recharged as well), which will result in a generally similar recharge cycle time as it would for a full recharge of all the batteries, but these recharge cycles will occur less frequently and thus boost productivity, by optimization of the charging time.

In an added advantage, the batteries in prior art embodiments, every battery needed to be recharged more often which leads to degradation of the battery and to a shorter lifetime, while the proposed invention reduces the recharge frequency, thus also lengthening the actual total lifetime of the battery.

In a further added advantage, the invention as proposed allows for a very efficient power transfer between the batteries, up to 97% and higher conversion efficiency, as opposed to makeshift systems (combining several converter) which optimistically speaking attain a 70-90% efficiency in the transfer. An inefficient power transfer means a less efficient use of power and thus faster drain of the total power of the composite AGV and a shorter power cycle before charging is necessary, or the provision of more batteries (which both take space and weight and costs). Furthermore, energy consumption is much higher due to the losses in the power transfer, which is avoided by the buck-booster topology employed in the proposed system.

In a preferred embodiment, the system comprises a control unit, preferably a microcontroller, wherein the control unit is configured to control the power transfer circuit and to determine the battery of which functional AGV slave module is to be engaged as recipient or donor in the power transfer with the battery of the main AGV. Preferably, the control unit controls the power transfer circuit and/or determines which functional AGV slave module is to be engaged as the recipient or donor, based at least on the state of charge of the battery and/or the state of charge of the battery of the functional AGV slave module. In case of a multitude of functional AGV slave modules, a single power transfer circuit is preferably provided which can be connected to all of the functional AGV slave modules on the composite AGV. Alternatively, it is however possible to provide a plurality of power transfer circuits in the system for power transfer so as to use each power transfer circuit to couple between a single functional AGV slave module and the main AGV.

Note that a control unit can be used to control the internal workings of the power transfer circuit (as said, controlling switches and other components). However, it is also possible that a control unit is used to decide which batteries to engage in the power transfer. It is furthermore possible that both functions are performed by a single power transfer circuit.

In a preferred embodiment, the system for power transfer further comprises a communication bus network, preferably a CAN bus network, adapted to be connected to the main AGV and the one or more functional AGV slave modules, whereby said communication (preferably CAN) bus network is adapted to determine the state of charge of the battery of the main AGV and/or the state of charge of the battery of the one or more functional AGV slave modules, and whereby said communication (preferably CAN) bus network is configured to transmit said state of charge of the main AGV and/or said state of charge of the functional AGV slave module to the control unit.

Alternatively, the system for power transfer can detect the state of charge of the battery (or batteries) of the functional AGV slave modules and/or of the main AGV, thus no longer needing a battery management system to provide it with this data, which can be corrupted or wrong. By detecting the states of charge itself directly, it can directly make decisions for the power transfer. In this version, the power transfer circuit is adapted to determine the state of charge of the battery of the main AGV directly and/or the state of charge of the battery of the one or more functional AGV slave modules directly and to provide said state of charge of the main AGV and/or said state of charge of the functional AGV slave module to the control unit.

Furthermore in a preferred embodiment, this control unit, as said preferably a microcontroller, is configured to operate the power transfer circuit in a desired regime, depending on certain input values, for instance states of charge of connected AGV batteries (slave and/or main), input and/or output current setpoints and others.

The advantage of this addition, is amongst others, that it allows an easy communication from (and to) the batteries involved in the power transfer, to the system (and from) for power transfer. For instance, this allows the system for power transfer, and specifically the control unit, to direct the power transfer circuit in a desired regime (buck, boost, buck-boost) based on the state of charges of the batteries involved.

In a preferred embodiment, the system comprises a control unit, and the power transfer circuit is adapted according to bidirectional buck-boost topology and is configured to enable bidirectional power transfer from the battery of the main AGV to the battery of the functional AGV slave modules and from the battery of the functional AGV slave modules to the battery of the main AGV, wherein the control unit is to control the power transfer circuit and is configured to determine a direction for the bidirectional power transfer, either from the battery of the main AGV to the battery of the functional AGV slave modules or from the battery of the functional AGV slave modules to the battery of the main AGV. The advantages of such a construction are clear, and amongst others ensure that an optimized running time for the composite AGV in between recharging is ensured. Such an embodiment is further discussed in the examples, and shown in the figures. Preferably, the power transfer circuit has a symmetric topology, however with possibly differing actual circuit values for the individual components, such as coil inductances. Preferably, the control unit controls the power transfer circuit based on the state of charge of the main AGV and/or the functional AGV slave module.

In a further preferred embodiment, the power transfer circuit is adapted to operate under an extra-low voltage (ELV) for the normal output voltage of the main AGV, and is preferably comprised between 10 V and 96 V, for instance with such upper and lower limits as: 12 V, 14 V, 16 V, 17 V, 18 V, 19 V, 20 V, 21 V, 22 V, 23 V, 24 V, 25 V, 26 V, 27 V, 28 V, 29 V, 30 V, 32 V, 34 V, 36 V, 38 V, 40 V, 41 V, 42 V, 43 V, 44 V, 45 V, 46 V, 47 V, 48 V, 49 V, 50 V, 51 V, 52 V, 53 V, 54 V, 55 V, 56 V, 58 V, 60 V, 62 V, 64 V, 66 V, 68 V, 70 V, 72 V, 74 V, 76 V, 78 V, 80 V, 82 V, 84 V, 86 V, 88 V, 90 V, 92 V, 94 V and 96 V, as well as values therein between. Higher and lower bounds are possible as well, such as 4 V, 6 V, 8 V or 100 V, 110 V, 120 V or more. More preferably the power transfer circuit is adapted to operate under the normal output voltage of the main AGV being between 16 V and 65 V. Especially preferable, the normal output voltage of the main AGV is either approximately 24 V or approximately 48 V (these preferred normal output voltages apply to the normal output voltages of the functional AGV slave modules as well, or at least approximately). These output voltages are in a secure range that protects against electrical shock.

In a more preferred embodiment, the composite AGV comprises at least a first and at least one second detachable functional AGV slave module modularly mounted on the composite AGV. Typically composite AGVs comprise a plurality of such modular functional AGV slave modules. The power transfer circuit present is configured to (substantially simultaneously) transfer electrical power from the battery of the at least one second slave to the battery of the main AGV and to transfer electrical power from the battery of the main AGV to the battery of the first functional AGV slave module when the state of charge of the battery of the first functional AGV slave module is below the threshold state of charge and the state of charge of the battery of the main AGV is below a main threshold state of charge and the state of charge of the battery of the at least one second functional AGV slave module is above a transmitting threshold state of charge, which is preferably equal to the threshold state of charge for the (battery of) first functional AGV slave module.

The advantage of this indirect power transfer first of all is that it does not necessitate power transfer circuits between the batteries of the functional AGV slave modules, thus reducing the amount of such circuits necessary for the composite AGV which saves both costs, space and weight. Furthermore, the advantage of having a highly efficient energy transfer (97% conversion efficiency or more) allows such a detour between the second functional AGV slave module, that gives the energy, and the first functional AGV slave module, that receives the energy, without unacceptably high power losses (for instance, with a 70% efficiency due to the use of combinations of DC-DCs, less than half the transmitted energy is actually received, as opposed to over 96% in the case of the proposed invention). In an even further advantage, it stands to reason that, while some functional AGV slave module batteries will drain faster than expected (and than they were given initial capacity for), others will last longer than expected and thus have a surplus. If the battery of the main AGV reaches a certain discharge level, the still available charge therein should be conserved somewhat, and therefore the invention can be adapted so that the control unit is configured to recognize the fullest battery/batteries of the functional AGV slave modules and choose this battery/these batteries to transfer energy to the more empty battery (or batteries), via the main AGV battery. This way, the time before the composite AGV needs to dock to recharge its batteries is increased as the entire energy supply of the combined batteries of the composite AGV can be approximately exhausted (or almost, to a certain 'safety' level that allows the main AGV to return to a charging station) before a recharge is necessary.

In a preferred embodiment of the invention, the power transfer circuit comprises (or is) a diode-less buck-boost converter, preferably wherein said buck-boost converter uses one or more MOSFETs and/or MODFETs, more preferably Gallium nitride (GaN) MODFETs, for switching. By avoiding the use of diodes, the power transfer is executed far more efficient than in most other possible systems, while remaining economically relevant and practically executable (space, weight, safety and other restrictions) as opposed to alternatives with similarly efficiency. Instead of the diodes, for example a number of switches (or similar elements) can be provided, which can be controlled by a control unit capable of closing and opening the switches independently in a desired regime. Preferably said control unit is provided with energy by one of the batteries, preferably from the battery from which the power is transferred to another battery. Alternatively, the amount of diodes can be reduced as much as possible, or alternatives using diodes can be used still.

In a preferred embodiment of the invention, the power transfer circuit is adapted to communicate through a communication bus, preferably a CAN bus, with the batteries that are attached to the system, and whereby the system furthermore comprises an interface configured to allow a user to introduce and/or change one or more charging parameters for power transfer, whereby a user can communicate through said interface with the power transfer circuit through a communication bus, preferably a CAN bus. These charging parameters can be specific thresholds for state of charge (as mentioned earlier and further in this document), discharge or charge levels, safety limits for currents and/or for voltages, the normal output voltages of the batteries attached to the system. Preferably however, the normal output voltages are recognized automatically by the power transfer circuit when connected to the batteries. This can for instance be achieved by the batteries being provided in terms of units which comprise the actual battery, but furthermore a data label or electronic data component (for instance a BMS or battery management system). Said data label or electronic data component comprises the normal output voltage (and possibly other relevant characteristics) of the battery and, when connected to the power transfer circuit and communicating with said power transfer circuit over a communication bus network, preferably a CAN bus network, transmits the normal output voltage (and possibly other relevant characteristics) of the battery to the power transfer circuit.

In a possible embodiment the first connection means is/are a press-fit connector and/or the second connection means is/are a press-fit connector.

In an alternative embodiment, the power transfer system comprises one or more first contacts which is adapted to electrically connect the battery of the main AGV to the buck circuit. Furthermore, the power transfer system comprises one or more second contacts, adapted to electrically connect the boost circuit to the battery of the functional AGV slave module. As many AGVs are provided with such contacts, it is preferable that the power transfer system is provided with suitable connection elements.

In a preferred embodiment, the power transfer circuit is substantially completely encased in a housing, whereby only the first and the second connection means (or several of such first and/or second connection means) extend outwards from said housing, so as to protect the circuitry. In heavy duty environments as AGVs are typically used in, a sturdy housing or frame protecting the delicate circuitry within is desirable to make sure accidental impacts are avoided, or at least reduced. The housing can be made to comprise a myriad of materials, preferably at least one or more of these is substantially rigid and resistant to impacts.

In a preferred embodiment of the invention, the power transfer circuit is configured to operate with a maximum output current setpoint of less than 150 % of a normal output current of the battery which receives power from the power transfer circuit. Preferably, this percentage is less than 125% or lower.

In a preferred embodiment of the invention, the power transfer circuit is configured to operate with a maximum input current setpoint of less than 150 % of a normal input current of the battery which sends power through the power transfer circuit. Preferably, this percentage is less than 125% or lower.

In a preferred embodiment of the invention, the threshold state of charge for the functional AGV slave module varies dependent on at least the state of charge of (the battery of) the main AGV.

It stands to reason that the functional AGV slave module cannot draw power from the main AGV when this is running too low on power itself, as this would immobilize the composite AGV and result in more loss of time than the original problem. Therefore, it is to be considered that a variable threshold state of charge for the functional AGV slave modules should be used, which depends at least on the state of charge of the main AGV. For instance, the threshold state of charge could vary along with the state of charge for the main AGV (or with an offset upwards or downwards, preferably downwards so the functional AGV slave module does not draw power from the main AGV when the main AGV has less power than the slave). However, this variation need not be linear, but can be any kind of function which best suits the demands and practical issues. For instance, this could also vary along with coordinates, position, a task list, etc. of the composite AGV, as the composite AGV will need to retain enough power in the main AGV battery to get back to a charging station at all times. Therefore, preferably a 'safety state of charge' could be implemented for the main AGV battery that is not be gone under to ensure safe return to a charging station. Again, said safety state of charge can vary with the position of the AGV with respect to the charging station(s).

In a preferred embodiment of the invention, an overcurrent protection is provided between the battery of the main AGV and the power transfer circuit. Preferably the overcurrent protection between the battery of the main AGV and the power transfer circuit is a trip unit.

In a preferred embodiment of the invention, an overcurrent protection is provided between the battery of the functional AGV slave module and the power transfer circuit.

Preferably the overcurrent protection between the battery of the main AGV and the power transfer circuit is a trip unit.

In a more preferred embodiment, an overcurrent protection is provided both between the battery of the main AGV and the power transfer circuit and between the battery of the functional AGV slave module and the power transfer circuit, more preferably these overcurrent protections are as discussed in previous paragraphs.

In order to better both battery and power transfer circuit, an overcurrent protection can be provided at one or both of the abovementioned places in the system. Should elements of the system malfunction or other problems arise and lead to an overcurrent going to and/or coming from the power transfer circuit, the overcurrent protection, possibly in the form of a trip unit (alternatively fuses or other options can be used), interrupt current flow at detection of such a fault.

In a particularly preferred embodiment of the invention, the power transfer circuit comprises:
a. a first switch with a first terminal electrically connected to the first connection means;
b. a fourth switch with a first terminal electrically connected to the second connection means;
c. a first inductor with a first terminal electrically connected to a second terminal of the first switch;
d. a second inductor with a first terminal electrically connected to a second terminal of the fourth switch, and with a second terminal electrically connected to a second terminal of the first inductor;
e. a second switch with a first terminal electrically connected to the second terminal of the first switch, and with a second terminal electrically connected to a ground;
f. a third switch with a first terminal electrically connected to the second terminal of the fourth switch, and with a second terminal electrically connected to a ground;
g. a capacitor with a first terminal electrically connected to the second terminal of the first inductor and to the second terminal of the fourth inductor, and with a second terminal electrically connected to a ground.

Preferably, the power transfer circuit further comprises a control unit configured to electronically control the first switch, the fourth switch, the second switch and the fourth switch. Preferably, said control unit is adapted to communicate with the main AGV and/or with the functional AGV slave module through communication bus (preferably CAN bus) when the power transfer circuit is connected to the main AGV and/or with the functional AGV slave module.

Alternatively, in another particularly preferred embodiment of the invention, the power transfer system comprises:
a. a first switch with a first terminal electrically connected to the first connection means;
b. a fourth switch with a first terminal electrically connected to the second connection means;
c. an inductor with a first terminal electrically connected to a second terminal of the first switch and a second terminal electrically connected to a second terminal of the fourth switch;
d. a second switch with a first terminal electrically connected to the second terminal of the first switch, and with a second terminal electrically connected to a ground;
e. a third switch with a first terminal electrically connected to the second terminal of the fourth switch, and with a second terminal electrically connected to a ground.

Preferably, the power transfer circuit further comprises a control unit configured to electronically control the first switch, the third switch, the second switch and the fourth switch. Preferably, said control unit is adapted to communicate with the main AGV and/or with the functional AGV slave module through communication bus (preferably CAN bus) when the power transfer circuit is connected to the main AGV and/or with the functional AGV slave module.

Preferably, a filter circuit is present between the first switch and the first connection means. Said filter circuit's function is described further in this document. Also preferably, and more preferably in combination with the filter circuit between the first circuit and the first connection means, a filter circuit is present between the fourth switch and the second connection means. Alternatively, said filter circuits can already be present in the AGVs to modify input and output to the batteries.

The term "switch" does not necessarily limit the component to simple switches, but also can refer to other components that perform a switching function, such as (bipolar) transistors, MOSFETs (metal-oxide semiconductor field-effect transistor), MODFETs (modulation-doped FETs), IGBTs (insulated-gate bipolar transistor), HEMTs (high-electron mobility transistor) and others, typically containing semiconductor parts. Furthermore, it is to be noted that, though the power transfer circuit described above is still according to buck-boost topology, due to its configuration, it is bidirectional, so no 'buckside' or'boostside' can be discerned as both sides can operate as buckside and as boostside, depending on which battery is to be charged.

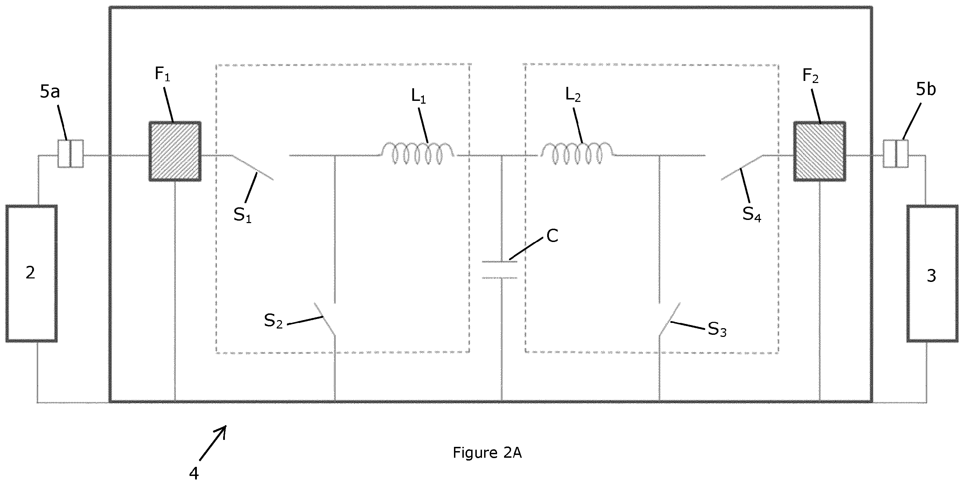

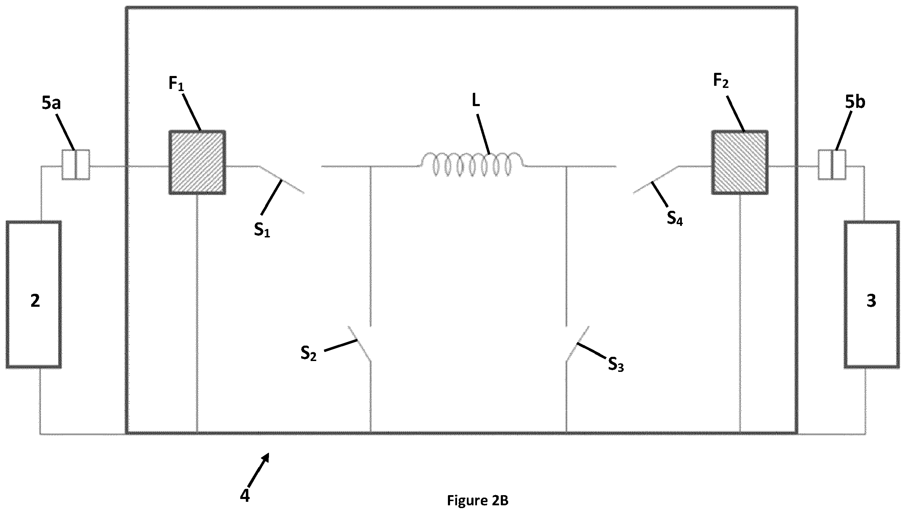

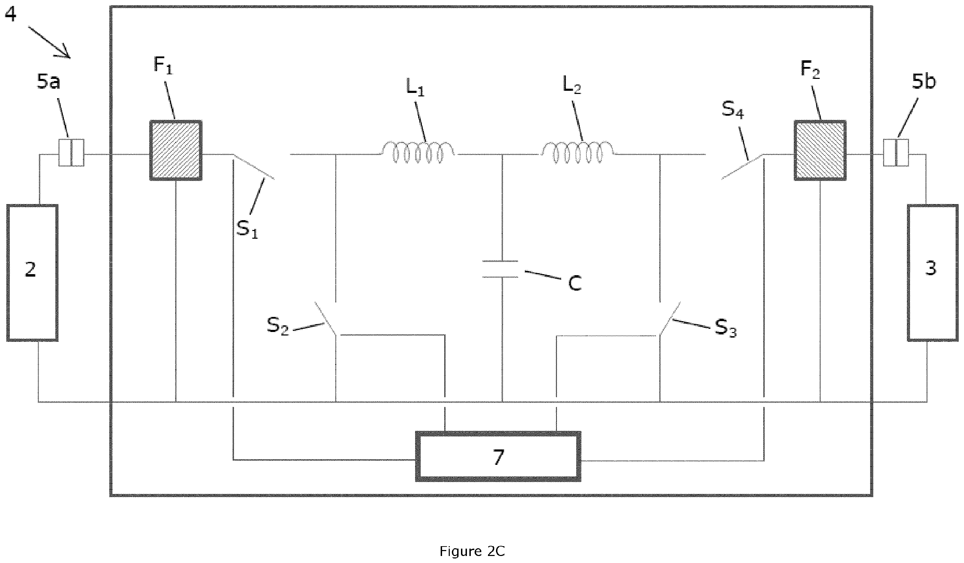

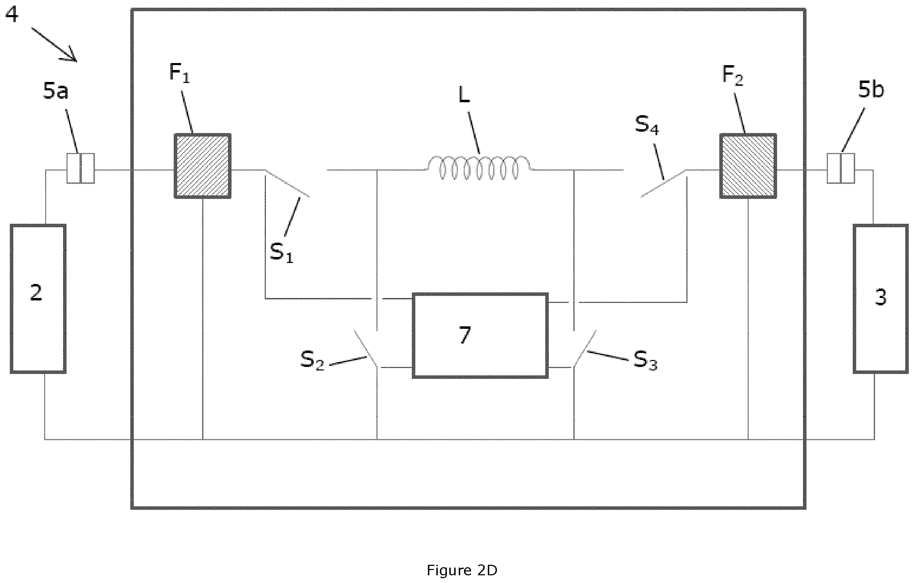

An example of said embodiment can be seen in the Figures 2, wherein it can be understood that the basic topology is symmetrical to allow bidirectional power transfer, depending on the voltages of the batteries amongst others. The advantages of this are clear, as this would allow not only to charge a low-running battery, whether it be the main AGV battery or that of a slave unit, without having certain requirements of voltages of said batteries (due to the buck-boost topology). Furthermore, this would allow the system to charge from a functional AGV slave module to the main AGV to a second functional AGV slave module if necessary. Lastly, as can be seen, the circuit is exceedingly simple, having little to no expensive components, and only needs to control the switches very carefully. The operation of said circuit is discussed further under the examples.

In a preferred embodiment of the invention, the power transfer circuit comprises a filter (circuit) provided between the buck circuit and the first connection means, said filter (circuit) being adapted to equalize at least one, and preferably several, of the following characteristics:
a. input voltage for the power transfer circuit;
b. output voltage of the power transfer circuit;
c. input current for the power transfer circuit; and/or
d. output current of the power transfer circuit.

In a preferred embodiment of the invention, the power transfer circuit comprises a filter (circuit) provided between the boost circuit and the second connection means, said filter (circuit) being adapted to equalize at least one, and preferably several, of the following characteristics:
a. input voltage for the power transfer circuit;
b. output voltage of the power transfer circuit;
c. input current for the power transfer circuit; and/or
d. output current of the power transfer circuit.

Preferably at both ends of the power transfer circuit, a filter is provided as stipulated above.

In case of a bidirectional power transfer circuit, the terms "input" and "output" can be at variable terminals or locations in time depending on the operating regime (the directionality of the charging) of the power transfer circuit. However, the same principles remain for this configuration.

A filter reduces variations both incoming to the power transfer circuit (thus protecting the power transfer circuit) as well as reducing ripples in the currents and thereby equalizing the output of the power transfer circuit, thus improving the lifetime of the battery that is being charged, as voltage and/or current peaks are reduced which could potentially damage the battery. This is especially helpful as the buck-boost topology of the power transfer circuit can produce high frequency ripples on the output voltages of the power transfer circuit. In case of a bidirectional power transfer circuit, it is therefore recommended to provide a filter (circuit) at both ends, since these can both serve as buckside end or boostside end, depending on the situation.

In a preferred embodiment of the invention, the control unit operates based on the state of charge of the battery of the main AGV and/or on the state of charge of the battery of the functional AGV slave module, and based on the normal output voltage of the battery of the main AGV and the normal output voltage of the battery of the functional AGV slave module. The term "operates" here refers to the control unit making decisions and performs actions based on the aforementioned parameters.

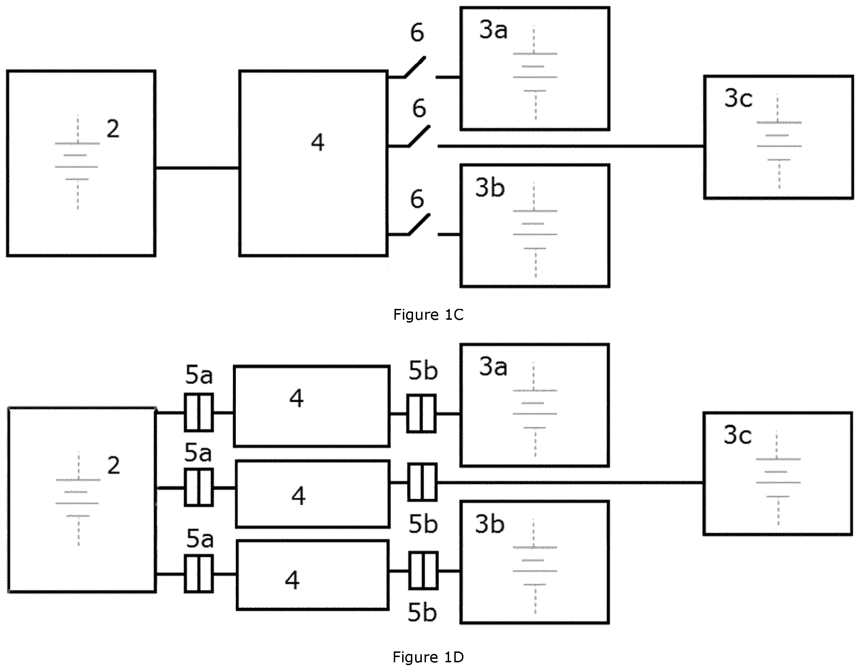

In general, a number of embodiments can be envisioned, all of these being part of the invention. In a first option, a power transfer system is provided between each main AGV and each functional AGV slave module. This power transfer system can be mounted on the main AGV, or it can be mounted on the functional AGV slave module, or can be even constructed to be part of the AGV, with connection means to connect with the other AGV with which it exchanges power. Alternatively, it can be mounted as a separate module on the composite AGV. In a second option, a single power transfer system can be used to couple a main AGV with several functional AGV slave modules at once, with which power can be exchanged. Furthermore, it is to be noted that a controller and/or actuator can be implemented which is tasked with connecting or disconnecting AGV batteries from the power transfer system, depending on between which AGV batteries the power transfer is to be executed. This can for instance be seen in the Figure 1C, wherein switches are present between the power transfer system (4) and the main AGV (2) and a plurality of functional AGV slave modules (3a, 3b, 3c).

In a second aspect, provided is an improved composite AGV, as discussed earlier. Said composite AGV comprises a main AGV and a plurality of detachable functional AGV slave modules modularly mounted on the composite AGV. The main AGV and the functional AGV slave modules each comprise at least one battery, whereby a system for power transfer as described in this document (according to the first aspect of the invention) is provided between the battery of the main AGV and the battery of each of the functional AGV slave modules.

In a further aspect, the invention provides a method for power transfer between batteries of separate modular AGVs and a main AGV, which form a composite AGV through the use of a system as described in this document. The method preferably allows bidirectional charging between batteries of similar, equal or different voltages.

Specifically, it describes a method for power transfer in a composite AGV, said composite AGV comprising a main AGV with at least one battery, said composite AGV one or more functional AGV slave modules each with at least one battery, and said composite AGV furthermore comprising a system for power transfer according to the invention, whereby at least one battery of the main AGV is connected to one of the first connection means of the system for power transfer and at least one battery of at least one, preferably all, of the functional AGV slave modules is connected to one of the second connection means of the system for power transfer, the method comprising the following steps:
a. determining a state of charge for the at least one battery of the main AGV;
b. determining a state of charge for the at least one battery of the at least one, preferably all, of the functional AGV slave modules;
c. if the state of charge for one of the at least one battery of the at least one, preferably all, of the functional AGV slave modules is lower than a threshold state of charge, executing a power transfer from the battery of the main AGV to said one battery of the functional AGV slave modules with a state of charge lower than the threshold state of charge; or
d. if the state of charge for one of the at least one batteries of the main AGV is lower than a main threshold state of charge, executing a power transfer from at least one of the batteries of at least one or more of the functional AGV slave modules to said battery of the main AGV with a state of charge lower than the main threshold state of charge; or
e. if the state of charge for one of the at least one battery of the at least one, preferably all, of the functional AGV slave modules is lower than a threshold state of charge and if the state of charge for one of the at least one batteries of the main AGV is lower than a main threshold state of charge, executing a power transfer from at least one other battery of one of the functional AGV slave modules, the state of charge of said at least one other battery being above the threshold state of charge, to the at least one battery of the main AGV, and from the at least one battery of the main AGV to the battery of which the state of charge is lower than the threshold state of charge.

The advantages of this method can be understood from the viewpoint of the advantages of the system itself. Furthermore, all mentioned further embodiments and applications for the system can easily be implemented in the method by one skilled in the art, and are to be viewed as implicit further embodiments of the method, with associated advantages.

The invention is further described by the following non-limiting examples which further illustrate the invention, and are not intended to, nor should they be interpreted to, limit the scope of the invention.

The present invention will be now described in more details, referring to examples that are not limitative.

### Examples

### Example 1: Overall configuration

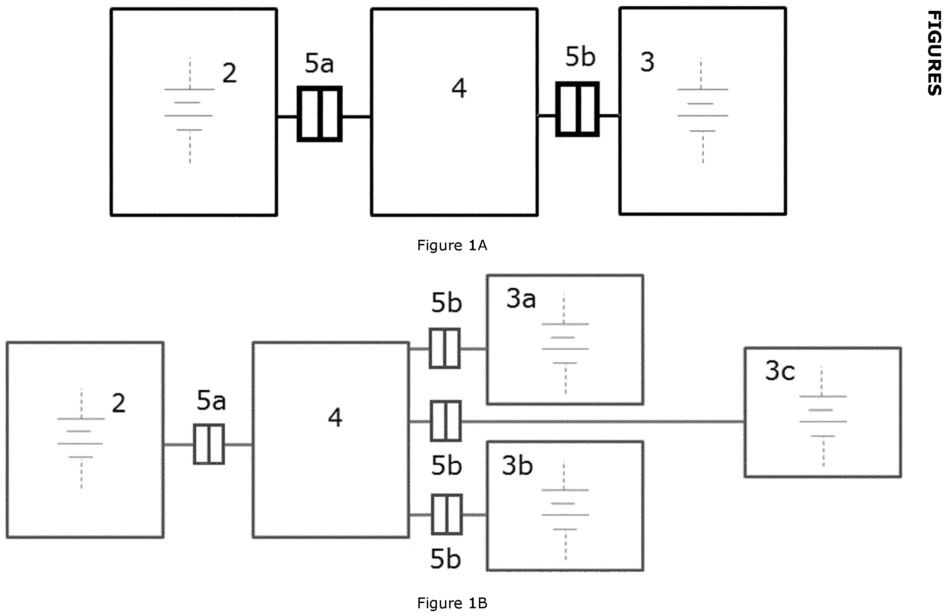

The Figure 1A, Figure 1B and Figure 1C shows a general structural image of how a composite AGV (1) with one (Figure 1A) or several (Figure 1B and Figure 1C) modular AGV units (slave units and a main unit) is equipped with the system for power transfer (4) of the invention. A main AGV (2) with a battery is provided and linked to one or more functional AGV slave modules (3a, 3b, ...) (specifically the battery of the main AGV is linked to the batteries of the one or more functional AGV slave modules) with the system of the invention (4), which is preferably easily connectable to the batteries. Said slave units (3a, 3b, ...) can preferably be easily modularly installed in the composite AGV (1). In Figure 1B, it can be seen that the power transfer system (4) is connected to the main AGV (2) and the functional AGV slave modules (3a, 3B, 3C) by connection means (5a, 5b). As said before, said connection means can be contacts, connectors or other options. Furthermore, in order to determine which of the functional AGV slave modules participates in the power transfer, switches (6) can be present as shown in Figure 1C, which are controllable through a controller, for instance the control unit of the invention.

In case of a multitude of batteries from functional AGV slave modules (or from main AGVs), one or more controllers can furthermore be provided to determine which batteries are to be used in the power transfer. A controllers can be used that controls both which battery on the functional AGV slave module side and, if necessary, which battery on the main AGV side is used (optionally, several batteries can be used on either side to transfer power simultaneously to another battery, or to several, with an adapted power transfer circuit).

Furthermore, as shown in Figure 2C and Figure 2D, a control unit (7) can be integrated in the power transfer circuit to control the operating regimes of the switches (S1, S2, S3, S4).

### Example 2: First embodiment of a power transfer circuit

The Figure 2A (and 2C) shows a more detailed version of an embodiment of the power transfer circuit of the invention, which links batteries (2 and 3) together for power transfer. In the shown embodiment, only a main AGV, or the battery thereof, (2) and a functional AGV slave module, or the battery thereof, (3) are shown. However, one skilled in the art can extrapolate the following example to a system linking several of such functional AGV slave modules, each with one or more batteries, with a main AGV (or several of these) with one or more batteries. Therefore, said expansion is also to be considered as constituting an implicit part of the invention at hand.

In what follows, the situation will be discussed wherein the battery of the main AGV (2) is used to charge the battery of the functional AGV slave module (3). However, due to the topologically symmetrical configuration of the circuit, the reverse can also be executed with the circuit.

In a first case, it is assumed that the voltage of the battery of the main AGV (2) is higher than that of the battery of the functional AGV slave module (3), and the power transfer circuit will function in so-called 'buck mode'. In a first phase, the first switch (S1) is closed, while the second and third are open. The fourth switch (S4) is closed. In this phase, the first inductor, L1, and the capacitor, C, are being 'charged'. The first inductor L1 builds up a magnetic field, while the capacitor builds up an electric field. Meanwhile, part of the voltage supplied by the battery of the main AGV (2) is provided across the battery of the functional AGV slave module (3), thus having a lower, 'bucked' voltage than the initial voltage of the main AGV (2), and allowing the charging of the battery of the functional AGV slave module (3) at a desired voltage. In a second phase, the first switch (S1) is opened, while the second switch (S2) closes. The third switch (S3) remains open and the fourth switch (S4) remains closed. In this regime, the magnetic field of the first inductor starts collapsing, thereby generating a current through the second conductor L2 and towards the battery of the functional AGV slave module (3), thereby charging said battery, however still causing a lowered buck voltage across the battery of the functional AGV slave module. The current is maintained as the magnetic field of L1 collapses, by the capacitor which discharges and adds to the current flowing towards the battery (3), keeping the voltage across the battery (3) reasonable constant during this phase. After this, the first phase is reinitiated etc.

In a second case, it is assumed that the voltage of the battery of the main AGV (2) is lower than that of the battery of the functional AGV slave module (3). In this case, the voltage of the main AGV is to be boosted, and the power transfer circuit will function in 'boost mode'. The method under which this can be achieved can be derived from the above and general knowledge of the principles of buck-boost technology.

The third case is a situation in which the voltages of the charging battery and the battery to be charged are similar (possibly slightly different). This is the so-called buck-boost mode (or region). The situation where Vᵢₙ is slightly higher than Vₒᵤₜ will be addressed briefly, the alternative, Vₒᵤₜ being slightly higher than Vᵢₙ is similar and will not be discussed.

In a first phase, the first (S1) and third (S3) switch are closed, the others are open, which leads to the inductors and the capacitor being 'charged', respectively building up magnetic fields and an electric field. After this phase, the third switch (S3) is opened and the fourth (S4) closed, thereby causing the 'receiving' battery (3) to be included in the circuit, but whereby the higher voltage of the battery of the main AGV (2) is only partly supplied over the battery of the functional AGV slave module (3), thereby providing a slightly lower, 'bucked' voltage over the battery of the functional AGV slave module (3) and thus allowing the charging at desired conditions, while still continuing to 'charge' the inductors and the capacitor at a lower rate than before. In a third phase, the second switch (S2) is closed and the first (S1) is opened (while the fourth (S4) remains closed). This will cause the magnetic fields of the inductors to start collapsing, thereby generating a current towards the battery of the functional AGV slave module (3), still at a lowered voltage than that of the battery of the main AGV (2). As the magnetic fields collapse, the current to the battery of the functional AGV slave module (3) is maintained by the capacitor discharging and adding to the current provided by the inductors, thereby allowing the charging of the battery of the functional AGV slave module (3) at a desired voltage. In a fourth phase, the second switch (S2) opens and the first (S1) closes again, after which the first phase is repeated, etcetera.

The operation of the buck-boost circuit in this mode (and the similar mode wherein Vₒᵤₜ is slightly higher than Vᵢₙ) enables power transfer between batteries of slightly different voltages, and in combination with the other modes (buck or boost), the proposed invention allows power transfer between batteries with one's voltage in a broad range of the other's voltage.

### Example 3: Second embodiment of a power transfer circuit

The Figure 2B (and 2D) shows a more detailed version of a second embodiment of the power transfer circuit of the invention. This more simplified version has no DC link, and a single inductor (L). The interplay of the switches controls the working regime of the power transfer circuit, be it buck, boost or buck-boost. The working principle of this circuit will not be expanded upon, as it is similar to example 2 and to be considered as part of the expertise of the skilled person in the art. Note that in principle, there is a practical resistance in the wirings, and thus a practical resistance extending from the second and third switch (S2 and S3) downwards, towards what is essentially a ground. In these embodiments, filters (F1, F2) are present at both ends of the power transfer circuit to reduce ripples in output voltage, depending on in which direction power is transferred, though these are however not necessarily present in all embodiments of the invention.

## Claims

1. A composite automated guided vehicle AGV comprising a main automated guided vehicle AGV (2) and a plurality of detachable functional AGV slave modules modularly mounted on the composite AGV, the main AGV and the functional AGV slave modules (3a, 3b, 3c) each comprising at least one battery, whereby a system (4) for power transfer is provided between the battery of the main AGV and the battery of one of the functional AGV slave modules; whereby the battery of the functional AGV slave module comprises a normal output voltage within a range of 25% to 400%, preferably within a range of 50% to 200%, of a normal output voltage of the battery of the main AGV, the system for power transfer comprising:
a. at least one power transfer circuit according to a buck-boost topology which comprises a buck circuit and a boost circuit, and optionally a DC link which electrically connects the buck circuit to the boost circuit;
b. one or more first separable connection means which are electrically connected to the buck circuit, adapted to electrically, separably, i.e. reversibly, connect the battery of the main AGV to the buck circuit;
c. one or more second separable connection means which are electrically connected to the boost circuit, adapted to electrically, separably, i.e. reversibly, connect the boost circuit to the battery of the functional AGV slave module;
wherein the power transfer circuit is configured to transfer electrical power between the battery of the main AGV and the battery of the functional AGV slave module when the battery of the main AGV or the battery of the functional AGV slave module has a state of charge below a predetermined and/or possibly variable threshold state of charge, preferably whereby the threshold state of charge for the functional AGV slave module varies dependent on the state of charge of the main AGV.

2. The composite AGV according to any the preceding claim 1, wherein the system for power transfer comprises a control unit, wherein the control unit is configured to control the power transfer circuit and to determine the battery of which functional AGV slave module is to be engaged as recipient or donor in the power transfer with the battery of the main AGV, preferably based on the state of charge of the battery of the main AGV and/or the state of charge of the battery of the functional AGV slave module.

3. The composite AGV according to the preceding claim 2, wherein the system for power transfer further comprises a communication bus network, preferably a CAN bus network, which is adapted to be connected to the main AGV and the one or more functional AGV slave modules, whereby said communication bus network, preferably said CAN bus network, is adapted to determine the state of charge of the battery of the main AGV and/or the state of charge of the battery of the one or more functional AGV slave modules, and whereby said communication bus network, preferably said CAN bus network is configured to transmit said state of charge of the main AGV and/or said state of charge of the functional AGV slave module to the control unit.

4. The composite AGV according to the preceding claim 2, wherein the power transfer circuit is adapted to determine the state of charge of the battery of the main AGV directly and/or the state of charge of the battery of the one or more functional AGV slave modules directly and to provide said state of charge of the main AGV and/or said state of charge of the functional AGV slave module to the control unit.

5. The composite AGV according to any one of the preceding claims 2 to 4, wherein the power transfer circuit is according to bidirectional buck-boost topology and is configured to enable bidirectional power transfer from the battery of the main AGV to the battery of the functional AGV slave modules and from the battery of the functional AGV slave modules to the battery of the main AGV, wherein the control unit is configured to control the power transfer circuit and to determine a direction for the bidirectional power transfer, either from the battery of the main AGV to the battery of the functional AGV slave modules or from the battery of the functional AGV slave modules to the battery of the main AGV.

6. The composite AGV according to any one of the preceding claims 1 to 5, wherein the power transfer circuit is adapted to operate under an extra-low voltage (ELV) for the normal output voltage of the main AGV, and is preferably comprised between 10 V and 96 V, more preferably between 16 V and 65 V, most preferably between 20 V and 55 V.

7. The composite AGV according to any one of the preceding claims 1 to 6, whereby the composite AGV comprises at least a first and at least one second detachable functional AGV slave module modularly mounted on the composite AGV, whereby the power transfer circuit is configured to transfer electrical power from the battery of the at least one second functional AGV slave module to the battery of the main AGV and to transfer electrical power from the battery of the main AGV to the battery of the first functional AGV slave module when the state of charge of the battery of the first functional AGV slave module is below the threshold state of charge and the state of charge of the battery of the main AGV is below a main threshold state of charge and the state of charge of the battery of the at least one second functional AGV slave module is above the threshold state of charge.

8. The composite AGV according to any one of the preceding claims 1 to 7, whereby the power transfer circuit is an essentially diode-less buck-boost converter, preferably wherein said buck-boost converter uses one or more MOSFETs and/or MODFETs, more preferably Gallium nitride (GaN) MODFETs, for switching.

9. The composite AGV according to any one of the preceding claims 1 to 8, whereby an overcurrent protection is provided between the battery of the main AGV and the power transfer circuit, preferably a trip unit, and/or whereby an overcurrent protection is provided between the battery of the functional AGV slave module and the power transfer circuit, preferably a trip unit.

10. The composite AGV according to any one of the preceding claims 1 to 9, whereby the power transfer circuit comprises:
a. a first switch (S1) with a first terminal electrically connected to a first connection means (5a) to the main AGV (2);
b. a fourth switch (S4) with a first terminal electrically connected to a second connection means (5b) to the functional AGV slave module (3a, 3b, 3c);
c. a first inductor (L1) with a first terminal electrically connected to a second terminal of the first switch (S1);
d. a second inductor (L2) with a first terminal electrically connected to a second terminal of the fourth switch (S4), and with a second terminal electrically connected to a second terminal of the first inductor (L1);
e. a second switch (S2) with a first terminal electrically connected to the second terminal of the first switch (S1), and with a second terminal electrically connected to a ground;
f. a third switch (S3) with a first terminal electrically connected to the second terminal of the fourth switch (S4), and with a second terminal electrically connected to a ground;
g. a capacitor (C) with a first terminal electrically connected to the second terminal of the first inductor (L1) and to the second terminal of the second inductor (L2), and with a second terminal electrically connected to a ground.

11. The composite AGV according to any one of the preceding claims 1 to 9, whereby the power transfer circuit comprises:
a. a first switch (S1) with a first terminal electrically connected to a first connection means (5a) to the main AGV (2);
b. a fourth switch (S4) with a first terminal electrically connected to a second connection means (5b) to the functional AGV slave module (3a, 3b, 3c);
c. an inductor (L) with a first terminal electrically connected to a second terminal of the first switch (S1) and a second terminal electrically connected to a second terminal of the fourth switch (S4);
d. a second switch (S2) with a first terminal electrically connected to the second terminal of the first switch (S1), and with a second terminal electrically connected to a ground;
e. a third switch (S3) with a first terminal electrically connected to the second terminal of the fourth switch (S4), and with a second terminal electrically connected to a ground.

12. The composite AGV according to any one of the preceding claims 10 or 11, the power transfer circuit further comprising:
a control unit (7) configured to measure the input current, the output current, the input voltage and/or the output voltage of the power transfer circuit, whereby said control unit is configured to electronically control the first switch (S1), the fourth switch (S4), the second switch (S2) and the third switch (S3), and whereby said control unit is adapted to communicate with the main AGV (2) and/or with the functional AGV slave module (3a, 3b, 3c) through communication bus, preferably through CAN bus, when the power transfer circuit is connected to the main AGV and/or with the functional AGV slave module.

13. The composite AGV according to any one of the preceding claims 1 to 12, whereby the power transfer circuit comprises at least one of, preferably both of:
a. a filter (F1) provided between the buck circuit and the first connection means (5a), and said filter (F1) is adapted to equalize input and/or output voltages and/or input current and/or output currents of the power transfer circuit;
b. a filter (F2) provided between the boost circuit and the second connection means (5b) and whereby said filter (F2) is adapted to equalize input voltage and/or input current for the power transfer circuit and/or adapted to equalize output voltage and/or output current of the power transfer circuit.

14. Method for power transfer in a composite AGV according to any one of claims 1 to 13, whereby at least one battery of the main AGV (2) is connected to one of a first connection means (5a) of the system (4) for power transfer and at least one battery of at least one, preferably all, of the functional AGV slave modules (3a, 3b, 3c) is connected to one of a second connection means (5b) of the system for power transfer, the method comprising the following steps:
a. determining a state of charge for the at least one battery of the main AGV (2);
b. determining a state of charge for the at least one battery of the at least one, preferably all, of the functional AGV slave modules (3a, 3b, 3c) ;
c. if the state of charge for one of the at least one battery of the at least one, preferably all, of the functional AGV slave modules (3a, 3b, 3c) is lower than a threshold state of charge, executing a power transfer from the battery of the main AGV to said one battery of the functional AGV slave modules (3a, 3b, 3c) with a state of charge lower than the threshold state of charge; or
d. if the state of charge for one of the at least one batteries of the main AGV (2) is lower than a main threshold state of charge, executing a power transfer from at least one of the batteries of at least one or more of the functional AGV slave modules (3a, 3b, 3c) to said battery of the main AGV (2) with a state of charge lower than the main threshold state of charge; or
e. if the state of charge for one of the at least one battery of the at least one, preferably all, of the functional AGV slave modules (3a, 3b, 3c) is lower than a threshold state of charge and if the state of charge for one of the at least one batteries of the main AGV (2) is lower than a main threshold state of charge, executing a power transfer from at least one other battery of one of the functional AGV slave modules (3a, 3b, 3c) , the state of charge of said at least one other battery being above the threshold state of charge, to the at least one battery of the main AGV (2), and from the at least one battery of the main AGV (2) to the battery of which the state of charge is lower than the threshold state of charge.

## Patentansprüche

1. Automatisch geführtes Verbundfahrzeug AGV, umfassend ein automatisch geführtes Hauptfahrzeug AGV (2) und mehrere abnehmbare funktionale AGV-Slave-Module, die modular am Verbund-AGV montiert sind, wobei das Haupt-AGV und die funktionalen AGV-Slave-Module (3a, 3b, 3c) jeweils zumindest eine Batterie umfassen, wodurch ein System (4) zur Leistungsübertragung zwischen der Batterie des Haupt-AGV und der Batterie eines der funktionalen AGV-Slave-Module bereitgestellt wird; wobei die Batterie des funktionalen AGV-Slave-Moduls eine normale Ausgangsspannung innerhalb eines Bereichs von 25 % bis 400 %, vorzugsweise innerhalb eines Bereichs von 50 % bis 200 %, einer normalen Ausgangsspannung der Batterie des Haupt-AGV umfasst, wobei das System für Leistungsübertragung Folgendes umfasst:
a. zumindest eine Leistungsübertragungsschaltung entsprechend einer Buck-Boosttopologie, die eine Buck-Schaltung und eine Boost-Schaltung und optional eine DC-Verbindung, die die Buck-Schaltung elektrisch mit der Boost-Schaltung verbindet, umfasst;
b. ein oder mehrere erste trennbare Verbindungsmittel, die elektrisch mit der Buck-Schaltung verbunden sind, dazu angepasst, die Batterie des Haupt-AGV elektrisch, trennbar, d. h. reversibel mit der Buck-Schaltung zu verbinden;
c. ein oder mehrere zweite trennbare Verbindungsmittel, die elektrisch mit der Boost-Schaltung verbunden sind, dazu angepasst, die Boost-Schaltung elektrisch, trennbar, d. h. reversibel mit der Batterie des funktionalen AGV-Slave-Moduls zu verbinden;
wobei die Leistungsübertragungsschaltung dazu ausgelegt ist, elektrische Leistung zwischen der Batterie des Haupt-AGV und der Batterie des funktionalen AGV-Slave-Moduls zu übertragen, wenn die Batterie des Haupt-AGV oder die Batterie des funktionalen AGV-Slave-Moduls einen Ladezustand unter einem vorbestimmten und/oder möglicherweise variablen Schwellenladezustand aufweist, wobei vorzugsweise der Schwellenladezustand für das funktionale AGV-Slave-Modul abhängig vom Ladezustand des Haupt-AGV variiert.

2. Verbund-AGV nach dem vorhergehenden Anspruch 1, wobei das System für Leistungsübertragung eine Steuereinheit umfasst, wobei die Steuereinheit ausgelegt ist zum Steuern der Leistungsübertragungsschaltung und zum Bestimmen, die Batterie welches funktionalen AGV-Slave-Moduls als Empfänger oder Spender in der Leistungsübertragung mit der Batterie des Haupt-AGV zu aktivieren ist, vorzugsweise basierend auf dem Ladezustand der Batterie des Haupt-AGV und/oder dem Ladezustand der Batterie des funktionalen AGV-Slave-Moduls.

3. Verbund-AGV nach dem vorhergehenden Anspruch 2, wobei das System für Leistungsübertragung ferner ein Kommunikationsbusnetzwerk, vorzugsweise ein CAN-Bus-Netzwerk umfasst, das dazu angepasst ist, mit dem Haupt-AGV und dem einen oder den mehreren funktionalen AGV-Slave-Modulen verbunden zu werden, wobei das Kommunikationsbusnetzwerk, vorzugsweise das CAN-Bus-Netzwerk, dazu angepasst ist, den Ladezustand der Batterie des Haupt-AGV und/oder den Ladezustand der Batterie des einen oder der mehreren funktionalen AGV-Slave-Module zu bestimmen, und wobei das Kommunikationsbusnetzwerk, vorzugsweise das CAN-Bus-Netzwerk, dazu ausgelegt ist, den Ladezustand des Haupt-AGV und/oder den Ladezustand des funktionalen AGV-Slave-Moduls an die Steuereinheit zu übertragen.

4. Verbund-AGV nach dem vorhergehenden Anspruch 2, wobei die Leistungsübertragungsschaltung dazu angepasst ist, den Ladezustand der Batterie des Haupt-AGV direkt und/oder den Ladezustand der Batterie des einen oder der mehreren funktionalen AGV-Slave-Module direkt zu bestimmen und den Ladezustand des Haupt-AGV und/oder den Ladezustand des funktionalen AGV-Slave-Moduls für die Steuereinheit bereitzustellen.

5. Verbund-AGV nach einem der vorhergehenden Ansprüche 2 bis 4, wobei die Leistungsübertragungsschaltung entsprechend einer bidirektionalen Buck-Boosttopologie ist und dazu ausgelegt ist, bidirektionale Leistungsübertragung von der Batterie des Haupt-AGV zur Batterie des funktionalen AGV-Slave-Moduls und von der Batterie des funktionalen AGV-Slave-Moduls zur Batterie des Haupt-AGV zu ermöglichen, wobei die Steuereinheit dazu ausgelegt ist, die Leistungsübertragungsschaltung zu steuern und eine Richtung für die bidirektionale Leistungsübertragung zu bestimmen, entweder von der Batterie des Haupt-AGV zur Batterie des funktionalen AGV-Slave-Moduls oder von der Batterie des funktionalen AGV-Slave-Moduls zur Batterie des Haupt-AGV.

6. Verbund-AGV nach einem der vorhergehenden Ansprüche 1 bis 5, wobei die Leistungsübertragungsschaltung dazu angepasst ist, unter einer extra-niedrigen Spannung (ELV) für die normale Ausgangsspannung des Haupt-AGV zu arbeiten, und ist vorzugsweise enthalten zwischen 10 V und 96 V, noch eher vorzuziehen zwischen 16 V und 65 V, am ehesten vorzuziehen zwischen 20 V und 55 V.

7. Verbund-AGV nach einem der vorhergehenden Ansprüche 1 bis 6, wobei das Verbund-AGV zumindest ein erstes und zumindest ein zweites abnehmbares funktionales AGV-Slave-Modul umfasst, die modular am Verbund-AGV montiert sind, wobei die Leistungsübertragungsschaltung dazu ausgelegt ist, elektrische Leistung von der Batterie des zumindest einen zweiten funktionalen AGV-Slave-Moduls zur Batterie des Haupt-AGV zu übertragen und elektrische Leistung von der Batterie des Haupt-AGV zur Batterie des ersten funktionalen AGV-Slave-Moduls zu übertragen, wenn der Ladezustand der Batterie des ersten funktionalen AGV-Slave-Moduls unter dem Schwellenladezustand ist und der Ladezustand der Batterie des Haupt-AGV unter einem Hauptschwellenladezustand ist und der Ladezustand der Batterie des zumindest einen zweiten funktionalen AGV-Slave-Moduls über dem Schwellenladezustand ist.

8. Verbund-AGV nach einem der vorhergehenden Ansprüche 1 bis 7, wobei die Leistungsübertragungsschaltung ein im Wesentlichen diodenfreier Tief-Hochsetzwandler ist, wobei vorzugsweise der Tief-Hochsetzwandler einen oder mehrere MOSFETs und/oder MODFETs, noch eher zu bevorzugen Galliumnitrid(GaN)-MODFETs, zum Schalten verwendet.

9. Verbund-AGV nach einem der vorhergehenden Ansprüche 1 bis 8, wobei ein Überstromschutz zwischen der Batterie des Haupt-AGV und der Leistungsübertragungsschaltung, vorzugsweise eine Auslöseeinheit, bereitgestellt ist und/oder wobei ein Überstromschutz zwischen der Batterie des funktionalen AGV-Slave-Moduls und der Leistungsübertragungsschaltung, vorzugsweise eine Auslöseeinheit, bereitgestellt ist.

10. Verbund-AGV nach einem der vorhergehenden Ansprüche 1 bis 9, wobei die Leistungsübertragungsschaltung Folgendes umfasst:
a. einen ersten Schalter (S1) mit einem ersten Anschluss, der elektrisch mit einem ersten Verbindungsmittel (5a) mit dem Haupt-AGV (2) verbunden ist;
b. einen vierten Schalter (S4) mit einem ersten Anschluss, der elektrisch mit einem zweiten Verbindungsmittel (5b) mit dem funktionalen AGV-Slave-Modul (3a, 3b, 3c) verbunden ist;
c. einen ersten Induktor (L1) mit einem ersten Anschluss, der elektrisch mit einem zweiten Anschluss des ersten Schalters (S1) verbunden ist;
d. einen zweiten Induktor (L2) mit einem ersten Anschluss, der elektrisch mit einem zweiten Anschluss des vierten Schalters (S4) verbunden ist, und wobei der zweite Anschluss elektrisch mit einem zweiten Anschluss des ersten Induktors (L1) verbunden ist;
e. einen zweiten Schalter (S2) mit einem ersten Anschluss, der elektrisch mit dem zweiten Anschluss des ersten Schalters (S1) verbunden ist, und mit einem zweiten Anschluss, der elektrisch mit einer Masse verbunden ist;
f. einen dritten Schalter (S3) mit einem ersten Anschluss, der elektrisch mit dem zweiten Anschluss des vierten Schalters (S4) verbunden ist, und mit einem zweiten Anschluss, der elektrisch mit einer Masse verbunden ist;
g. einen Kondensator (C) mit einem ersten Anschluss, der elektrisch mit dem zweiten Anschluss des ersten Induktors (L1) und mit dem zweiten Anschluss des zweiten Induktors (L2) verbunden ist, und mit einem zweiten Anschluss, der elektrisch mit einer Masse verbunden ist;

11. Verbund-AGV nach einem der vorhergehenden Ansprüche 1 bis 9, wobei die Leistungsübertragungsschaltung Folgendes umfasst:
a. einen ersten Schalter (S1) mit einem ersten Anschluss, der elektrisch mit einem ersten Verbindungsmittel (5a) mit dem Haupt-AGV (2) verbunden ist;
b. einen vierten Schalter (S4) mit einem ersten Anschluss, der elektrisch mit einem zweiten Verbindungsmittel (5b) mit dem funktionalen ACGV-Slave-Modul (3a, 3b, 3c) verbunden ist;
c. einen Induktor (L) mit einem ersten Anschluss, der elektrisch mit einem zweiten Anschluss des ersten Schalters (S1) verbunden ist, und einem zweiten Anschluss, der elektrisch mit einem zweiten Anschluss des vierten Schalters (S4) verbunden ist;
d. einen zweiten Schalter (S2) mit einem ersten Anschluss, der elektrisch mit dem zweiten Anschluss des ersten Schalters (S1) verbunden ist, und mit einem zweiten Anschluss, der elektrisch mit einer Masse verbunden ist;
e. einen dritten Schalter (S3) mit einem ersten Anschluss, der elektrisch mit dem zweiten Anschluss des vierten Schalters (S4) verbunden ist, und mit einem zweiten Anschluss, der elektrisch mit einer Masse verbunden ist.

12. Verbund-AGV nach einem der vorhergehenden Ansprüche 10 oder 11, wobei die Leistungsübertragungsschaltung ferner Folgendes umfasst:
eine Steuereinheit (7), dazu ausgelegt, den Eingangsstrom, den Ausgangsstrom, die Eingangsspannung und/oder die Ausgangsspannung der Leistungsübertragungsschaltung zu messen, wobei die Steuereinheit dazu ausgelegt ist, den ersten Schalter (S1), den vierten Schalter (S4), den zweiten Schalter (S2) und den dritten Schalter (S3) elektronisch zu steuern, und wobei die Steuereinheit dazu angepasst ist, mit dem Haupt-AGV (2) und/oder mit dem funktionalen AGV-Slave-Modul (3a, 3b, 3c) über einen Kommunikationsbus, vorzugsweise über einen CAN-Bus, zu kommunizieren, wenn die Leistungsübertragungsschaltung mit dem Haupt-AGV und/oder mit dem funktionalen AGV-Slave-Modul verbunden ist.

13. Verbund-AGV nach einem der vorhergehenden Ansprüche 1 bis 12, wobei die Leistungsübertragungsschaltung zumindest eines, vorzugsweise beides aus Folgendem umfasst:
a. einen Filter (F1), bereitgestellt zwischen der Buck-Schaltung und dem ersten Verbindungsmittel (5a), und wobei der Filter (F1) dazu angepasst ist, Eingangs- und/oder Ausgangsspannungen und/oder Eingangsstrom und/oder Ausgangsströme der Leistungsübertragungsschaltung auszugleichen;
b. einen Filter (F2), bereitgestellt zwischen der Boost-Schaltung und dem zweiten Verbindungsmittel (5b), und wobei der Filter (F2) dazu angepasst ist, Eingangsspannung und/oder Eingangsstrom für die Leistungsübertragungsschaltung auszugleichen und/oder dazu angepasst ist, Ausgangsspannung und/oder Ausgangsstrom der Leistungsübertragungsschaltung auszugleichen.

14. Verfahren zur Leistungsübertragung in einem Verbund-AGV nach einem der vorhergehenden Ansprüche 1 bis 13, wobei zumindest eine Batterie des Haupt-AGV (2) mit einem aus einem ersten Verbindungsmittel (5a) des Systems (4) zur Leistungsübertragung verbunden ist und zumindest eine Batterie von zumindest einem, vorzugsweise allen, der funktionalen AGV-Slave-Module (3a, 3b, 3c) mit einem aus einem zweiten Verbindungsmittel (5b) des Systems zur Leistungsübertragung verbunden ist, wobei das Verfahren die folgenden Schritte umfasst:
a. Bestimmen eines Ladezustands für die zumindest eine Batterie des Haupt-AGV (2);
b. Bestimmen eines Ladezustands für die zumindest eine Batterie des zumindest einen, vorzugsweise von allen, der funktionalen AGV-Slave-Module (3a, 3b, 3c);
c. wenn der Ladezustand für eine der zumindest eine Batterie des zumindest einen, vorzugsweise von allen, der funktionalen AGV-Slave-Module (3a, 3b, 3c) niedriger als ein Schwellenladezustand ist, Ausführen einer Leistungsübertragung von der Batterie des Haupt-AGV zu der einen Batterie der funktionalen AGV-Slave-Module (3a, 3b, 3c) mit einem Ladezustand niedriger als dem Schwellenladezustand; oder
d. wenn der Ladezustand für eine der zumindest eine Batterie des Haupt-AGV (2) niedriger als ein Hauptschwellenladezustand ist, Ausführen einer Leistungsübertragung von zumindest einer der Batterien des zumindest einen oder von mehreren der funktionalen AGV-Slave-Module (3a, 3b, 3c) zur Batterie des Haupt-AGV (2) mit einem Ladezustand niedriger als dem Hauptschwellenladezustand; oder
e. wenn der Ladezustand für eine der zumindest einen Batterie des zumindest einen, oder vorzugsweise von allen, der funktionalen AGV-Slave-Module (3a, 3b, 3c) niedriger als ein Schwellenladezustand ist und wenn der Ladezustand für eine der zumindest einen Batterie des Haupt-AGV (2) niedriger als ein Hauptschwellenladezustand ist, Ausführen einer Leistungsübertragung von zumindest einer anderen Batterie von einem der funktionalen AGV-Slave-Module (3a, 3b, 3c), wobei der Ladezustand der zumindest einen anderen Batterie über dem Schwellenladezustand ist, zu der zumindest einen Batterie des Haupt-AGV (2), und von der zumindest einen Batterie des Haupt-AGV (2) zur Batterie, deren Ladezustand niedriger als der Schwellenladezustand ist.

## Revendications

1. Véhicule à guidage automatique, AGV, composite comprenant un véhicule à guidage automatique, AGV, principal (2) et une pluralité de modules esclaves d'AGV fonctionnels détachables montés de manière modulaire sur l'AGV composite, l'AGV principal et les modules esclaves d'AGV fonctionnels (3a, 3b, 3c) comprenant chacun au moins une batterie, moyennant quoi un système (4) de transfert d'énergie est fourni entre la batterie de l'AGV principal et la batterie de l'un des modules esclaves d'AGV fonctionnels ; où la batterie du module esclave d'AGV fonctionnel comprend une tension de sortie normale dans une plage de 25 % à 400 %, de préférence dans une plage de 50 % à 200 %, d'une tension de sortie normale de la batterie de l'AGV principal, le système de transfert d'énergie comprenant :
a. au moins un circuit de transfert d'énergie selon une topologie buck-boost qui comprend un circuit buck et un circuit boost, et éventuellement une liaison CC qui connecte électriquement le circuit buck au circuit boost ;
b. un ou plusieurs premiers moyens de connexion séparables qui sont électriquement connectés au circuit buck, adaptés pour connecter électriquement, séparément, c'est-à-dire de manière réversible, la batterie de l'AGV principal au circuit buck ;
c. un ou plusieurs deuxièmes moyens de connexion séparables qui sont électriquement connectés au circuit boost, adaptés pour connecter électriquement, séparément, c'est-à-dire de manière réversible, le circuit boost à la batterie du module esclave d'AGV fonctionnel ;
où le circuit de transfert d'énergie est configuré pour transférer l'énergie électrique entre la batterie de l'AGV principal et la batterie du module esclave d'AGV fonctionnel lorsque la batterie de l'AGV principal ou la batterie du module esclave d'AGV fonctionnel a un état de charge inférieur à un état de charge seuil prédéterminé et/ou éventuellement variable, de préférence où l'état de charge seuil pour le module esclave d'AGV fonctionnel varie en fonction de l'état de charge de l'AGV principal.

2. AGV composite selon la revendication 1 précédente, dans lequel le système de transfert d'énergie comprend une unité de contrôle, où l'unité de contrôle est configurée pour contrôler le circuit de transfert d'énergie et pour déterminer la batterie dont le module esclave d'AGV fonctionnel doit être engagé comme receveur ou donneur dans le transfert d'énergie avec la batterie de l'AGV principal, de préférence sur la base de l'état de charge de la batterie de l'AGV principal et/ou de l'état de charge de la batterie du module esclave d'AGV fonctionnel.

3. AGV composite selon la revendication 2 précédente, dans lequel le système de transfert d'énergie comprend en outre un réseau de bus de communication, de préférence un réseau de bus CAN, qui est adapté pour être connecté à l'AGV principal et à un ou plusieurs modules esclaves d'AGV fonctionnels, moyennant quoi ledit réseau de bus de communication, de préférence ledit réseau de bus CAN, est adapté pour déterminer l'état de charge de la batterie de l'AGV principal et/ou l'état de charge de la batterie des un ou plusieurs modules esclaves d'AGV fonctionnels, et moyennant quoi ledit réseau de bus de communication, de préférence ledit réseau de bus CAN, est configuré pour transmettre ledit état de charge de l'AGV principal et/ou ledit état de charge du module esclave d'AGV fonctionnel à l'unité de contrôle.

4. AGV composite selon la revendication 2 précédente, dans lequel le circuit de transfert d'énergie est adapté pour déterminer l'état de charge de la batterie de l'AGV principal directement et/ou l'état de charge de la batterie des un ou plusieurs modules esclaves d'AGV fonctionnels directement et pour fournir ledit état de charge de l'AGV principal et/ou ledit état de charge du module esclave d'AGV fonctionnel à l'unité de contrôle.

5. AGV composite selon l'une quelconque des revendications 2 à 4 précédentes, dans lequel le circuit de transfert d'énergie présente une topologie buck-boost bidirectionnelle et est configuré pour permettre un transfert d'énergie bidirectionnel de la batterie de l'AGV principal à la batterie des modules esclaves d'AGV fonctionnels et de la batterie des modules esclaves d'AGV fonctionnels à la batterie de l'AGV principal, où l'unité de contrôle est configurée pour contrôler le circuit de transfert d'énergie et pour déterminer une direction pour le transfert d'énergie bidirectionnel, soit de la batterie de l'AGV principal à la batterie des modules esclaves d'AGV fonctionnels, soit de la batterie des modules esclaves d'AGV fonctionnels à la batterie de l'AGV principal.

6. AGV composite selon l'une quelconque des revendications 1 à 5 précédentes, dans lequel le circuit de transfert d'énergie est adapté pour fonctionner sous une tension extra-basse (ELV) pour la tension de sortie normale de l'AGV principal, et a une tension de préférence comprise entre 10 V et 96 V, plus préférentiellement entre 16 V et 65 V, plus encore préférentiellement entre 20 V et 55 V.

7. AGV composite selon l'une quelconque des revendications 1 à 6 précédentes, dans lequel l'AGV composite comprend au moins un premier et au moins un deuxième module esclave d'AGV fonctionnel détachable monté de manière modulaire sur l'AGV composite, moyennant quoi le circuit de transfert d'énergie est configuré pour transférer l'énergie électrique de la batterie de l'au moins un deuxième module esclave d'AGV fonctionnel à la batterie de l'AGV principal et pour transférer l'énergie électrique de la batterie de l'AGV principal à la batterie du premier module esclave d'AGV fonctionnel lorsque l'état de charge de la batterie du premier module AGV fonctionnel est inférieur à l'état de charge seuil et l'état de charge de la batterie de l'AGV principal est inférieur à un état de charge seuil principal et l'état de charge de la batterie de l'au moins un deuxième module esclave d'AGV fonctionnel est supérieur à l'état de charge seuil.

8. AGV composite selon l'une quelconque des revendications 1 à 7 précédentes, dans lequel le circuit de transfert d'énergie est un convertisseur buck-boost essentiellement sans diode, de préférence dans lequel ledit convertisseur buck-boost utilise un ou plusieurs MOSFET et/ou MODFET, plus préférablement des MODFET au nitrure de gallium (GaN) pour la commutation.

9. AGV composite selon l'une quelconque des revendications 1 à 8 précédentes, dans lequel une protection contre les surintensités est pourvue entre la batterie de l'AGV principal et le circuit de transfert d'énergie, de préférence un bloc déclencheur, et/ou dans lequel une protection contre les surintensités est pourvue entre la batterie du module esclave d'AGV fonctionnel et le circuit de transfert d'énergie, de préférence un bloc déclencheur.

10. AGV composite selon l'une quelconque des revendications 1 à 9 précédentes, dans lequel le circuit de transfert d'énergie comprend :
a. un premier commutateur (S1) avec une première borne connectée électriquement à un premier moyen de connexion (5a) à l'AGV principal (2) ;
b. un quatrième commutateur (S4) avec une première borne connectée électriquement à un deuxième moyen de connexion (5b) au module esclave d'AGV fonctionnel (3a, 3b, 3c) ;
c. une première inductance (L1) avec une première borne connectée électriquement à une deuxième borne du premier commutateur (S1) ;
d. une deuxième inductance (L2) avec une première borne connectée électriquement à une deuxième borne du quatrième commutateur (S4), et avec une deuxième borne connectée électriquement à une deuxième borne de la première inductance (L1) ;
e. un deuxième commutateur (S2) avec une première borne connectée électriquement à la deuxième borne du premier commutateur (S1), et avec une deuxième borne connectée électriquement à la terre ;
f. un troisième commutateur (S3) avec une première borne connectée électriquement à la deuxième borne du quatrième commutateur (S4), et avec une deuxième borne connectée électriquement à la terre ;
g. un condensateur (C) avec une première borne connectée électriquement à la deuxième borne de la première inductance (L1) et à la deuxième borne de la deuxième inductance (L2), et avec une deuxième borne connectée électriquement à la terre.

11. AGV composite selon l'une quelconque des revendications 1 à 9 précédentes, dans lequel le circuit de transfert d'énergie comprend :
a. un premier commutateur (S1) avec une première borne connectée électriquement à un premier moyen de connexion (5a) à l'AGV principal (2) ;
b. un quatrième commutateur (S4) avec une première borne connectée électriquement à un deuxième moyen de connexion (5b) au module esclave d'AGV fonctionnel (3a, 3b, 3c) ;
c. une inductance (L) avec une première borne connectée électriquement à une deuxième borne du premier commutateur (S1) et une deuxième borne connectée électriquement à une deuxième borne du quatrième commutateur (S4) ;
d. un deuxième commutateur (S2) avec une première borne connectée électriquement à la deuxième borne du premier commutateur (S1), et avec une deuxième borne connectée électriquement à la terre ;
e. un troisième commutateur (S3) avec une première borne connectée électriquement à la deuxième borne du quatrième commutateur (S4), et avec une deuxième borne connectée électriquement à la terre.

12. AGV composite selon l'une quelconque des revendications 10 ou 11 précédentes, le circuit de transfert d'énergie comprenant en outre :
une unité de contrôle (7) configurée pour mesurer le courant d'entrée, le courant de sortie, la tension d'entrée et/ou la tension de sortie du circuit de transfert d'énergie, moyennant quoi ladite unité de contrôle est configurée pour contrôler électroniquement le premier commutateur (S1), le quatrième commutateur (S4), le deuxième commutateur (S2) et le troisième commutateur (S3), et où ladite unité de contrôle est adaptée pour communiquer avec l'AGV principal (2) et/ou avec le module esclave d'AGV fonctionnel (3a, 3b, 3c) par l'intermédiaire d'un bus de communication, de préférence par l'intermédiaire d'un bus CAN, lorsque le circuit de transfert d'énergie est connecté à l'AGV principal et/ou au module esclave d'AGV fonctionnel.

13. AGV composite selon l'une quelconque des revendications 1 à 12 précédentes, dans lequel le circuit de transfert d'énergie comprend au moins l'un, de préférence les deux, des éléments suivants :
a. un filtre (F1) pourvu entre le circuit buck et le premier moyen de connexion (5a), ledit filtre (F1) étant adapté pour égaliser les tensions d'entrée et/ou de sortie et/ou les courants d'entrée et/ou de sortie du circuit de transfert d'énergie ;
b. un filtre (F2) pourvu entre le circuit boost et le deuxième moyen de connexion (5b), moyennant quoi ledit filtre (F2) est adapté pour égaliser la tension d'entrée et/ou le courant d'entrée pour le circuit de transfert d'énergie et/ou adapté pour égaliser la tension de sortie et/ou le courant de sortie du circuit de transfert d'énergie.

14. Procédé de transfert d'énergie dans un AGV composite selon l'une quelconque des revendications 1 à 13 précédentes, dans lequel au moins une batterie de l'AGV principal (2) est connectée à l'un des premiers moyens de connexion (5a) du système (4) pour le transfert d'énergie, et au moins une batterie d'au moins un, de préférence la totalité, des modules esclaves d'AGV fonctionnels (3a, 3b, 3c) est connectée à l'un des deuxièmes moyens de connexion (5b) du système pour le transfert d'énergie, le procédé comprenant les étapes suivantes :
a. déterminer un état de charge pour l'au moins une batterie de l'AGV principal (2) ;
b. déterminer un état de charge pour l'au moins une batterie de l'au moins un, de préférence la totalité, des modules esclaves d'AGV fonctionnels (3a, 3b, 3c) ;
c. si l'état de charge de l'une des au moins une batterie de l'au moins un, de préférence la totalité, des modules esclaves d'AGV fonctionnels (3a, 3b, 3c) est inférieur à un état de charge seuil, exécuter un transfert d'énergie de la batterie de l'AGV principal vers ladite une batterie des modules esclaves d'AGV fonctionnels (3a, 3b, 3c) avec un état de charge inférieur à l'état de charge seuil ; ou
d. si l'état de charge de l'une des au moins une batterie de l'AGV principal (2) est inférieur à un état de charge seuil principal, exécuter un transfert d'énergie de l'au moins une des batteries d'au moins un ou plusieurs des modules esclaves d'AGV fonctionnels (3a, 3b, 3c) vers ladite batterie de l'AGV principal (2) ayant un état de charge inférieur à l'état de charge seuil principal ; ou
e. si l'état de charge de l'une de l'au moins une batterie de l'au moins un, de préférence la totalité, des modules esclaves d'AGV fonctionnels (3a, 3b, 3c) est inférieur à un état de charge seuil et si l'état de charge de l'une des au moins une batterie de l'AGV principal (2) est inférieur à un état de charge seuil principal, exécuter un transfert d'énergie de l'au moins une autre batterie de l'un des modules esclaves d'AGV fonctionnels (3a, 3b, 3c), l'état de charge de ladite au moins une autre batterie étant supérieur à l'état de charge seuil, vers l'au moins une batterie de l'AGV principal (2), et de l'au moins une batterie de l'AGV principal (2) vers la batterie dont l'état de charge est inférieur à l'état de charge seuil.
